(19) **Europäisches Patentamt / European Patent Office / Office européen des brevets**

(11) **EP 3 150 405 B1**

(12) # EUROPEAN PATENT SPECIFICATION

(45) Date of publication and mention
of the grant of the patent:
**06.05.2020 Bulletin 2020/19**

(51) Int Cl.:
**B60C 11/01** *(2006.01)*    **B60C 11/03** *(2006.01)*

(21) Application number: **15802929.8**

(22) Date of filing: **01.04.2015**

(86) International application number:
**PCT/JP2015/060379**

(87) International publication number:
**WO 2015/186419 (10.12.2015 Gazette 2015/49)**

(54) **AGRICULTURE TIRE**

LANDWIRTSCHAFTSREIFEN

PNEU AGRICOLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2014 JP 2014114156**

(43) Date of publication of application:
**05.04.2017 Bulletin 2017/14**

(73) Proprietor: **Bridgestone Corporation
Tokyo 104-8340 (JP)**

(72) Inventor: **IWAMOTO, Taro
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 610 079     WO-A1-2009/029088
AU-B2- 503 292      GB-A- 1 587 963
GB-A- 1 588 644     JP-A- H0 481 306
JP-A- H09 156 322    JP-A- H09 156 322
JP-A- 2004 291 936   JP-A- 2006 273 052
JP-A- 2008 062 846   JP-A- 2008 062 846
JP-A- 2012 051 478   JP-A- 2012 051 478
JP-Y1- S 309 501     US-A1- 2012 006 460
US-B1- 6 533 007**

**Description**

Technical Field

An exemplary embodiment of the present invention relates to an agricultural tire.

Background Art

An agricultural tire is disclosed in Japanese Patent Application Laid-Open (JP-A) No. 2012-51478 having plural lug blocks that are provided at a tread portion, and protruding portions that are provided at a tire side portion on at least one side in the tire width direction, and that protrude further to the outer side in the tire width direction than an end portions on the outer side in the tire width direction of the lug blocks. Attention is drawn to the disclosure of GB1588644.

SUMMARY OF THE INVENTION

Technical Problem

In an agricultural tire, traction is generated by reducing the angle of inclination of the lug blocks relative to the tire width direction so that the lug blocks are able to dig into the soil while traveling. However, if the angle of inclination of the lug blocks relative to the tire width direction is too small, then the problems arise that it becomes difficult to secure handling stability, to improve the ride comfort, and to suppress noise.

As a measure to counter this, it is effective that the lug blocks are inclined relative to the tire width direction, however, in this case, conversely, it becomes difficult to ensure a good traction performance (see, for example, paragraphs [0004] and [0005] of JP-A No. 2012-51478).

It is an object of an exemplary embodiment of the present invention to improve traction performance while ensuring handling stability and noise suppression.

Solution to the Problem

An agricultural tire according to the present invention is provided as claimed in claim 1.

Advantageous Effects of the Invention

As has been described above, according to an agricultural tire according to an exemplary embodiment of the present invention, the excellent effect is achieved that it is possible to improve the traction performance on uneven ground.

BRIEF DESCRIPTION OF THE DRAWINGS

FIG. 1 is a partial perspective view showing an agricultural tire according to an exemplary embodiment.
FIG. 2 is a partial plan view showing an agricultural tire according to the exemplary embodiment.
FIG. 3 is an enlarged half-cross-sectional view when the agricultural tire shown in FIG. 1 is cut along a virtual plane that passes through the center of rotation thereof.
FIG. 4A is a typical view (i.e., a partial plan view) showing a tire imprint after a vehicle that has been fitted with the agricultural tire according to the exemplary embodiment has traveled over trackway soil or the like on uneven ground.
FIG. 4B is a typical view (i.e., a partial side view) showing a tire imprint after a vehicle that has been fitted with the agricultural tire according to the exemplary embodiment has traveled over trackway soil or the like on uneven ground.
FIG. 5 is a graph showing a relationship between an angle of a surface facing in a tire rotation direction of a protruding portion forming the agricultural tire according to the exemplary embodiment, and force that is applied by the protruding portion to the trackway soil or the like on uneven ground.

DESCRIPTION OF THE EMBODIMENTS

Hereinafter, an embodiment (i.e., a preferred exemplary embodiment) for implementing will be described based on the drawings.

(Structure)

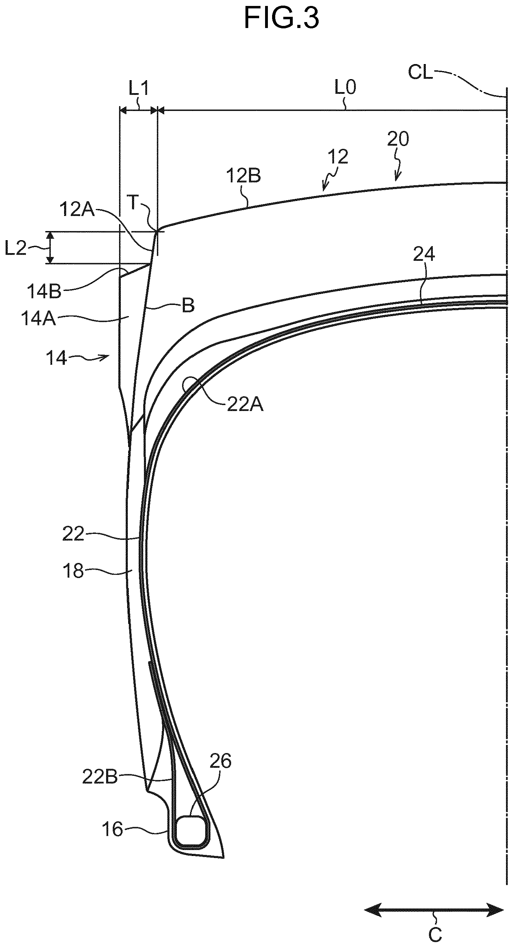

As is shown in FIG. 3, an agricultural tire 10 of an exemplary embodiment is provided with a pair of bead portions 16, a sidewall portion 18, a tread portion 20, a carcass 22, and a belt layer 24.

[Sidewall portion]

A sidewall portion 18 is connected to each one of the pair of bead portions 16.

[Carcass portion]

The carcass 22 is provided so as to extend in a toroidal shape between the pair of bead portions 16. In addition, as an example, the carcass 22 has a carcass main body portion 22A that is disposed so as to span the distance between a pair of bead core 26, and folded-over portions 22B that are wound around the bead cores 26.

[Belt layer]

The belt layer 24 is provided on an outer circumference of a crown portion of the carcass 22.

[Tread portion]

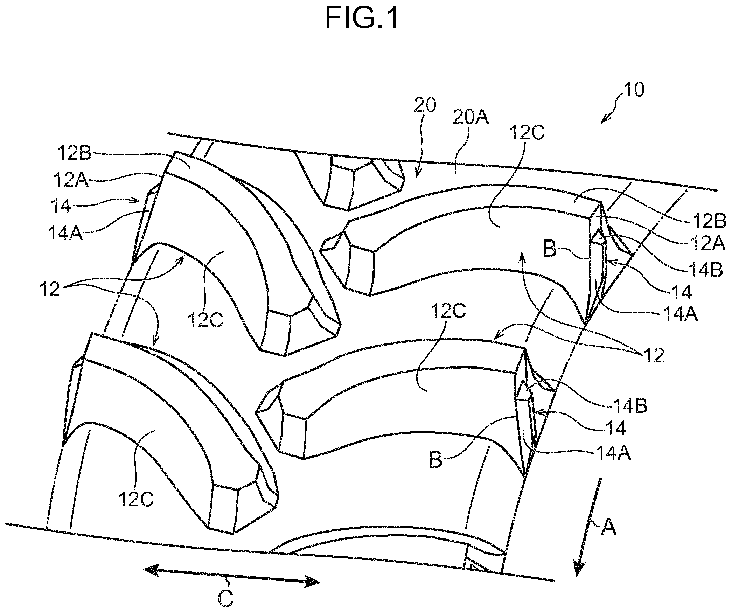

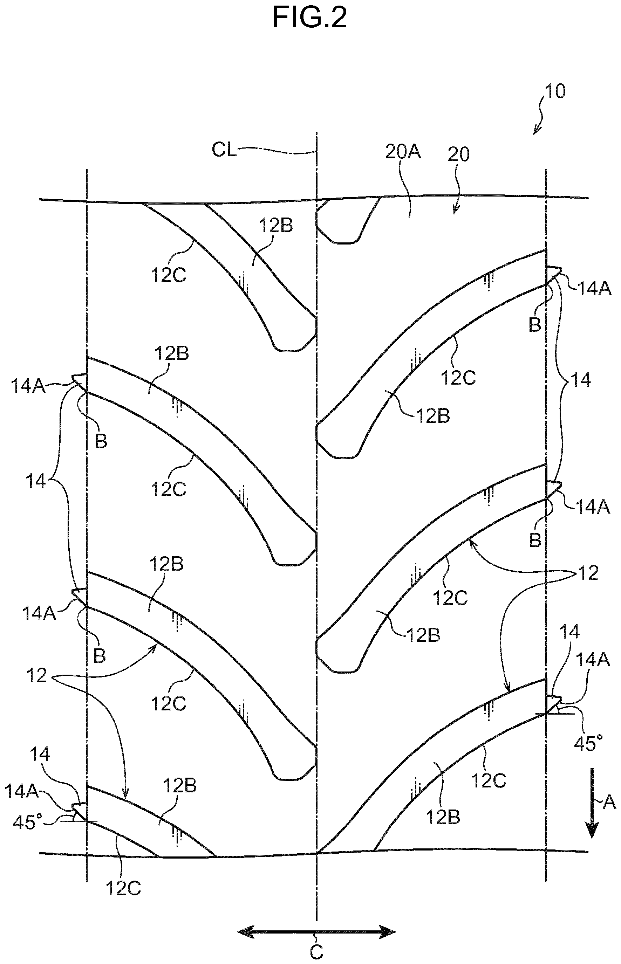

As is shown in FIG. 1 through FIG. 3, lug blocks 12 are provided at the tread portion 20. The tread portion 20 is continuous with the sidewall portions 18 on both sides. Note that portions of the tread portion 20 other than portions where the lug blocks 12 are provided are called a bottom surface 20A. The tread portion 20 is located on the outer circumferential side of the belt layer 24. Note that, in FIG. 2, a single-dot chain line CL shows an equatorial plane (i.e., a plane through the center in the width direction of the tread portion 20) of the agricultural tire 10.

[Lug blocks]

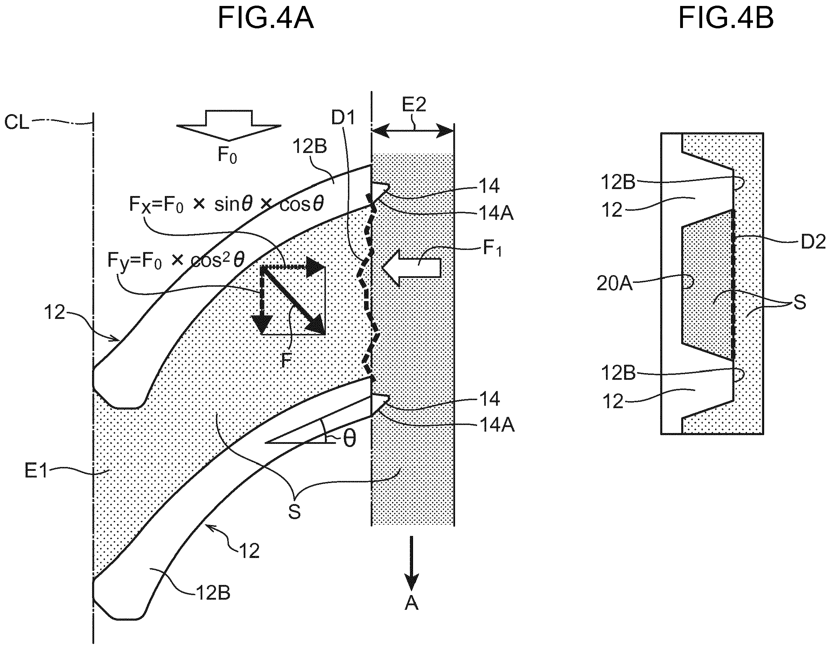

When a vehicle (not shown in the drawings) that has been fitted with the agricultural tires 10 is traveling on a paved road surface or the like, as a result of a top surface 12B of each lug block 12 described below being in contact with the paved road surface, the top surfaces 12B receive frictional force from the paved road surface. In addition, when a vehicle that has been fitted with the agricultural tires 10 is traveling over uneven ground, the lug blocks 12 generate traction on trackway soil S that is compressed by plural lug blocks 12 and the bottom surface 20A between plural lug blocks 12 to the front and rear in the tire circumferential direction (see FIG. 4A and FIG. 4B).
Plural lug blocks 12 are provided at the tread portion 20. As is shown in FIG. 1 and FIG. 2, as an example, plural lug blocks 12 are alternately arranged along the tire circumferential direction on both sides in the tire width direction. A longitudinal direction of each lug block 12 is inclined with respect to the tire width direction. Moreover, as is shown in FIG. 1, each lug block 12 protrudes from the outer side in the tire radial direction of the tread portion, and a top surface 12B that comes into contact with the paved road surface is formed on top of each lug block 12. When the agricultural tire 10 has been fitted onto a vehicle and this vehicle is moving forward, the agricultural tire 10 rotates in the direction shown by an arrow A (see FIG. 1 and FIG. 2). Namely, when a vehicle that has been fitted with the agriculture tires 10 is moving forward, an end portion on the inner side in the tire width direction of each lug block 12 comes into contact with the road surface before an end portion on the outer side in the tire width direction thereof. Here, the direction shown by the arrow A is an example of a tire forward rotation direction.
Moreover, as is shown in FIG. 3, an end portion 12A on the outer side in the tire width direction (hereinafter, referred to as an 'end portion 12A') of each lug block 12 protrudes at an inclination on the outer side in the tire width direction of a tread end T. Here, the end portion 12A is an example of an end portion on the outer side in the tire width direction. The end portion 12A of each lug block 12 forms a gently sloping curved surface, and is connected by a continuous curved surface to portions on the outer side in the tire width direction of the sidewall portion 18. Note that a surface of each lug block 12 that faces in the tire rotation direction is called a side surface 12C. Here, as is shown in FIG. 3, the aforementioned gently sloping curved surface formed by the end portion 12A of the lug blocks 12 that dig into the ground is a curved surface in which the rate of increase in the distance between this curved surface and the equatorial plane of the agricultural tire 10 gradually decreases towards the inner side from the end portion on the outer side in the tire radial direction.
Here, the aforementioned tread end T is the outermost ground-contacting portion in the tire width direction when the agricultural tire 10 is fitted onto a standard rim as stipulated in the 2010 edition of the Year Book published by JATMA (Japan Automobile Tire Manufacturers Association), and the internal pressure thereof is then inflated to 100% of an air pressure that corresponds to the maximum load (i.e., to the maximum air pressure) for the particular size and ply rating as prescribed in this Year Book, and the tire is then made to bear this maximum load. Note that if TRA Standards or ETRTO Standards are applied at the place of usage or at the place of manufacturing, then the present invention is made to comply with each of these Standards.

[Protruding portions (Principal portions)]

Protruding portions 14 have a function of generating traction when a vehicle that has been fitted with the agricultural tires 10 is traveling over uneven ground. In other words, by generating traction other than the traction generated by the lug blocks 12, the protruding portions 14 have the function of improving the traction performance of the agricultural tire 10.

As is shown in FIG. 1 through FIG. 3, the protruding portions 14 protrude towards the outer side in the tire width direction from the end portions 12A. In other words, the protruding portions 14 protrude further to the outer side in the tire width direction than the end portions on the outer side in the tire width direction of the lug blocks 12. Note that a maximum width L1 in the tire width direction of the protruding portions 14 is not more than 10% of a width 2 x L0 in the tire width direction of the tread portion 20.

Moreover, the protruding portions 14 also have a surface 14A that faces in the direction of the arrow A. In other words, the protruding portions 14 have a surface that faces in the tire rotation direction. Here, the surface 14A is an example of a surface that faces in the tire rotation direction. Note that, in the exemplary embodiment, the surface 14A is formed, as an example, as a flat surface. Moreover, if the angle of a virtual straight line extending towards the outer side in the tire width direction is taken as 0°, then the surface 14A is inclined 45° with respect to the tire width direction (i.e., a direction shown by an arrow C).

As is shown in FIG. 1 and FIG. 3, an end surface 14B on the outer side in the tire radial direction of each protruding portion 14 is formed further to the inner side in the tire radial direction than the top surface 12B of the lug blocks 12. Here, the end surfaces 14B are an example of an end portion on the outer side in the tire radial direction of the protruding portions 14. In other words, an end portion on the outer side in the tire radial direction of the protruding portions 14 is closer to the inner side in the tire radial direction than the end portion on the outer side in the tire radial direction of the lug blocks 12. Note that a distance L2 in the tire radial direction between the end portion on the outer side in the tire radial direction of each protruding portion 14 and the end portion on the outer side in the tire radial direction of each lug block 12 is set, as an example, to 25 mm.

Moreover, as is shown in FIG. 1 through FIG. 3, boundary portions B between the end portion on the inner side in the tire width direction of each protruding portion 14 (or each surface 14A) and the end portion on the outer side in the tire width direction of each lug block 12 (or each side surface 12C) match each other on the front side in the tire rotation direction.

Note that, as is described above, the boundary portions B match each other on the front side in the tire rotation direction, however, as is shown in FIG. 2, the side surface 12C of each lug block 12 and the surface 14A of each protruding portion 14 take the boundary portion B as their boundary, and are respectively inclined at mutually different angles with respect to the tire width direction (i.e., the direction of the arrow C). In other words, a corner portion is formed in the boundary portions B. Note that, if the angle of a virtual straight line extending towards the outer side in the tire width direction is taken as 0°, then the angle on the boundary portion B side of the side surface 12C is smaller than the angle of the surface 14A (which is 45° - see FIG. 2).

[Action]

Next, an action of the agricultural tire 10 of the exemplary embodiment will be described with reference made to the drawings. In the following description, firstly, action (i.e., mechanisms for generating traction and the like) generated by the lug blocks 12 and the bottom surface 20A will be described. Subsequently, an action of the protruding portions 14, which are the principal portions of the exemplary embodiment, will be described.

[Concept behind the provision of the protruding portions 14 having the surface 14A]

The inventors of the exemplary embodiment noticed, when they observed tire tracks created after a vehicle fitted with agricultural tires traveled over trackway soil S, that the trackway soil S is more compressed in portions on the outer side of the end portions on the outer side in the tire width direction of the lug blocks 12 (see an area E2 in FIG. 4A). Furthermore, the present inventors also confirmed that a shear plane D1 is present in a boundary portion between the area E2 and the trackway soil S in an area E1 that is sandwiched by plural lug blocks 12 to the front and rear in the direction of the arrow A, in other words, that shear force is generated in the trackway soil S in the area E2. In addition, after the present inventors examined what type of mechanism was causing the shear force to be generated in the area E2, and then separating the traction generated by a mutual interaction with the trackway soil S into friction force traction FT and shear force traction ST, then as a result of considering the compression force in the tire radial direction generated by the end portions 12A, they confirmed the presence of reaction force F1 described below. As a result, it became clear that shear force was working in the area E2 due to the reaction force F1 and the force generated by the rotation of the agricultural tire 10.

Therefore, the protruding portions 14 having the surface 14A of the exemplary embodiment were provided in order to enable the shear force working in the area E2 to contribute to an improvement in the traction performance.

[Traction provided by the lug blocks 12 and the bottom surface 20A]

Next, the mechanism whereby the lug blocks 12 and the bottom surface 20A that make up the agricultural tire 10 generated traction by mutual interaction with the trackway soil S will be described. The traction in this case can be thought of as comprising two main elements, namely, the friction force traction FT and the shear force traction ST.

The friction force traction FT is expressed by Formula (1).

$$FT = \mu \times P_{TOP} \times A_{TOP} \qquad \text{(Formula 1)}$$

Here, $\mu$ shows a coefficient of friction between the trackway soil S and the top surfaces 12B. $P_{TOP}$ shows the ground contact pressure (i.e., the contact pressure) applied to the trackway soil S by the top surfaces 12B. $A_{TOP}$ shows the ground contact surface area (i.e., the contact area) of the top surfaces 12B.

The shear force traction ST is expressed by Formula (2).

$$ST = (\varphi \times P_{Bottom} + c) \times A_{Bottom} \qquad \text{(Formula 2)}$$

Here, $\varphi$ shows an internal coefficient of friction. $P_{Bottom}$ shows the ground contact pressure (i.e., the contact pressure) applied to the trackway soil S by the bottom surface 20A. $A_{Bottom}$ shows the ground contact surface area (i.e., the contact area) of the bottom surface 20A. c shows an adhesive force that is determined by the viscosity and the like of the trackway soil S. Here, the internal coefficient friction represented by $\varphi$ is a coefficient that shows the degree of friction among the trackway soil S.

Note that the shear force traction ST expressed by Formula (2) shows the single plane shear force that shears the trackway soil S that has been compressed between lug blocks 12 that are adjacent to each other in the tire rotation direction (i.e., in the direction shown by the arrow A). Here, as is shown in FIG. 4B, the single plane shear force that shears the trackway soil S that has been compressed between mutually adjacent lug blocks 12 is the shear force on the trackway soil S that is compressed between lug blocks 12 that are adjacent to each other in the tire rotation direction (i.e., in the direction shown by the arrow A), in other words, the shear force on the trackway soil S on the inner side of a virtual line D2 that joins top surfaces 12B of the lug blocks 12 together. By increasing this single plane shear force, it is possible to improve the traction performance of the agricultural tire 10.

Next, the force imparted to the trackway soil S on uneven ground when the lug blocks 12 forming part of the agricultural tire 10 travel over uneven ground will be described with reference made to FIG. 4A and FIG. 4B.

When the agricultural tire 10 rotates in the direction shown by the arrow A, the trackway soil S in the areas E1 that are sandwiched between plural lug blocks 12 to the front and rear in the direction shown by the arrow A receives force $F_0$ from the lug block 12 on the upstream side in the direction shown by the arrow A, and is compressed in the direction shown by the arrow A. The trackway soil S sandwiched between plural lug blocks 12 to the front and rear in the direction shown by the arrow A receive force from the bottom surface 20A due to the weight of the vehicle that has been fitted with the agricultural tire 10, and is compressed in the tire radial direction.

Moreover, the agricultural tire 10 is deformed such that end portions 12A of the lug blocks 12 bulge in the tire width direction by the weight of the vehicle and the weight of the agricultural tire 10, and the deformed end portions 12A compress the trackway soil S. The area E2 shown in FIG. 4A shows a portion compressed by the end portions 12A.

Here, in FIG. 4A, $\theta$ shows an angle of inclination of an arbitrary portion of a lug block 12 with respect to the tire width direction. Thus, the lug block 12 that has received the force $F_0$ exerts a force of F on the trackway soil S in the area E1. Of this F, a force Fx which is applied in the tire width direction becomes $F_0 \times \sin\theta \times \cos\theta$, while a force Fy which is applied in the tire circumferential direction becomes $F_0 \times \cos 2\theta$. Moreover, a reaction force in the tire width direction in response to Fx (i.e., a force F1 of a force Fx that faces inwards from the outer side in the tire width direction) is generated in the trackway soil S in the area E2 as a result of the trackway soil S in the area E2 being compressed in the tire radial direction by the end portions 12A.

As is shown in FIG. 4A, the shear plane D1 in the trackway soil S is formed in the vicinity of a virtual line connecting together end portions on the outer side in the tire width direction of the lug blocks 12 (or at a boundary between the area E1 and the area E2). Furthermore, as is shown in FIG. 4B, the shear plane D2 in the trackway soil S is formed in the vicinity of a virtual line connecting the top surfaces 12B of the lug blocks 12 together.

In conjunction with the rotation of the agricultural tire 10 in the direction shown by the arrow A, a reaction force having the same force as the Fy received by the trackway soil S that has been compressed by the lug blocks 12 is applied to the lug blocks 12. In other words, the lug blocks 12 generate traction via the above-described mechanism. Because of this, a vehicle that has been fitted with the agricultural tires 10 is moved in the opposite direction from the direction shown by the arrow A.

[Action of the protruding portions]

An action of the protruding portions 14 will now be described with reference made to the drawings.

As has been described above, in order to improve the traction performance of the agricultural tire 10, it is necessary to increase the values in Formula (2). Specifically, it is sufficient if either $P_{Bottom}$ or $A_{Bottom}$, which are parameters applied in Formula (2), are increased.

Here, as is described above, in the case of the agricultural tire 10, as is shown in FIG. 4A, the area where the trackway soil S is compressed is not only the area E1, but also the area E2 which is compressed by the end portions 12A. In addition, if the trackway soil S in the area E2 can be used for the single plane shear force, then the traction performance of the agricultural tire 10 can be improved without the surface area of the bottom surface 20A sandwiched between mutually adjacent lug blocks 12 having to be increased.

In the case of the agricultural tire 10 of the exemplary embodiment, as is shown in FIG. 1 through FIG. 3, plural protruding portions 14 protrude towards the outer side in the tire width direction from the end portions 12A. In addition, the protruding portions 14 have the surfaces 14A that face in the tire rotation direction (i.e., in the direction shown by the arrow A). When a vehicle that has been fitted with the agricultural tires 10 is traveling over uneven ground, plural protruding portions 14 bite into the area E2 that has been compressed by the end portions 12A. As a result, the amount of trackway soil S kicked up in the tire width direction by the agricultural tire 10 is greater than for an agricultural tire that is not provided with the protruding portions 14. Because of this, compared with an agricultural tire that is not provided with the protruding portions 14, the single plane shear force is greater in the agricultural tire 10.

Accordingly, according to the agricultural tire 10 of the exemplary embodiment, it is possible to improve the traction performance on uneven ground compared to an agricultural tire that is not equipped with the protruding portions 14.

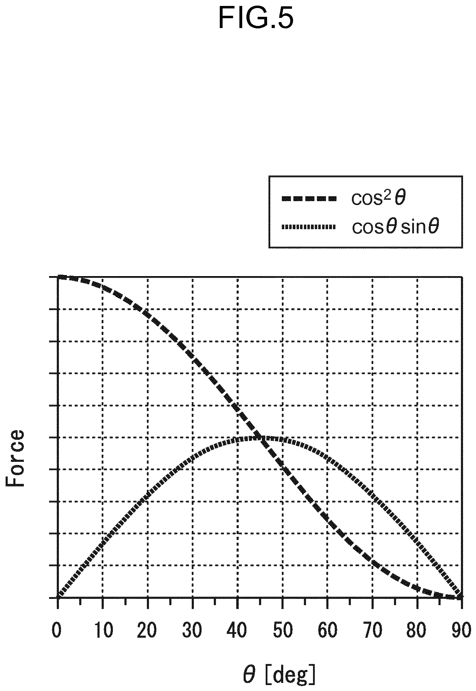

Moreover, in the case of the agricultural tire 10 of the exemplary embodiment, as is shown in FIG. 2, if the angle of a virtual straight line extending towards the outer side in the tire width direction is taken as 0°, then the surface 14A of the protruding portions 14 is inclined 45° with respect to the tire width direction (i.e., the direction shown by the arrow C). Here, as is described above, the reaction force F1 is applied in a direction towards the inner side from the outer side in the tire width direction in the area E2 that is compressed by the end portions 12A. In addition, as is shown in FIG. 5, when the angle of the surface 14A with respect to the tire width direction is 45°, then the force exerted towards the outer side from the inner side in the tire width direction is at maximum.

Accordingly, when the surface 14A of the protruding portions 14 forming part of the agricultural tire 10 of the exemplary embodiment is inclined 45° with respect to the tire width direction, the traction performance on uneven ground can be maximized.

Note that cases in which the angle of inclination of the surfaces 14A relative to the tire width direction is not 45° are also included as one aspect of the exemplary embodiment. For example, as is shown in FIG. 5, provided that the angle of inclination is within a range of 45° ± 30° (i.e., not less than 15° and not more than 75°), then no matter which angle of inclination is used, compared to an angle of inclination of 45°, it is possible for traction of 50% or more of the traction provided by the protruding portions 14 to be generated. More preferably, if the angle of inclination is within a range of 45° ± 10° (i.e., not less than 35° and not more than 55°), then no matter which angle of inclination is used, compared to an angle of inclination of 45°, it is possible for traction of 90% or more of the traction provided by the protruding portions 14 to be generated.

Moreover, in the case of the agricultural tire 10 of the exemplary embodiment, as is shown in FIG. 3, the maximum width L1 in the tire width direction of the protruding portions 14 is set to not more than 10% of a width 2 x L0 in the tire width direction of the tread portion 20. Because of this, the entire protruding portion 14 in the tire width direction is able to kick up the trackway soil S within the area E2 compressed by the end portions 12A. Note that if the maximum width L1 in the tire width direction of the protruding portions 14 is set to more than 10% of a width 2 x L0 in the tire width direction of the tread portion 20, then when a vehicle fitted with the agricultural tires 10 travels, for example, on a paved road surface, then it is easy for portions on the outer side in the tire width direction to strike some obstacle or other and be broken.

Moreover, as is shown in FIG. 1 and FIG. 3, the end portion 14B on the outer side in the tire radial direction of the protruding portions 14 is formed further to the inner side in the tire radial direction than the top surface 12B of the lug blocks 12. In other words, the end portion on the outer side in the tire radial direction of the protruding portions 14 is closer to the inner side in the tire radial direction than the end portion on the outer side in the tire radial direction of the lug blocks 12.

Because of this, in the case of the agricultural tire 10 of the exemplary embodiment, when a vehicle fitted with the agricultural tires 10 of the exemplary embodiment is traveling over a paved road surface, it is difficult for the protruding portions 14 to come into contact with the paved road surface and be worn down.

Accordingly, according to the agricultural tire 10 of the exemplary embodiment, it is possible to stabilize the traction performance on uneven ground over a prolonged period.

Moreover, the distance between the end portion of the protruding portions 14 and the end portion of the lug blocks 12 in the agricultural tire 10 is set to not more than 25 mm. Because of this, when a vehicle fitted with the agricultural tires 10 of the exemplary embodiment is traveling over uneven ground, it is possible to generate traction via the protruding portions 14.

Accordingly, according to the agricultural tire 10 of the exemplary embodiment, it is possible to stabilize the traction performance on uneven ground over a prolonged period.

Moreover, in the case of the agricultural tire 10 of the exemplary embodiment, as is shown in FIG. 1 through FIG. 3, boundary portions B between the end portion on the inner side in the tire radial direction of each protruding portion 14 (or each surface 14A) and the end portion on the outer side in the tire radial direction of each lug block 12 (or each side surface 12C) match each other on the front side in the direction shown by the arrow A (i.e., in the tire rotation direction).

Because of this, compared with when the boundary portions B do not match each other on the front side in the direction shown by the arrow A (i.e., in the tire rotation direction), it is possible for the protruding portions 14 of the exemplary embodiment to apply force to those portions of the area E2 to which force is applied by the lug blocks 12.

Moreover, in the case of the agricultural tire 10 of the exemplary embodiment, the surface 14A and the side surface 12C are connected together at mutually different angles with the boundary portion B being taken as their boundary. In addition, if the angle of a virtual straight line extending towards the outer side in the tire width direction is taken as 0°, then the angle on the boundary portion B side of the side surface 12C is smaller than the angle of the surface 14A (which is 45° - see FIG. 2).

Accordingly, according to the agricultural tire 10 of the exemplary embodiment, compared with a case in which the angles of the surface 14A and the side surface 12C relative to a virtual straight line extending towards the outer side in the tire width direction are the same at the boundary portion B, then during travel over a paved road surface, it is possible to both optimize the traveling stability obtained from the lug blocks 12 and optimize the improvement in the traction performance obtained from the protruding portions 14.

Exemplary embodiments of the present invention have described in detail above using a specific exemplary embodiment thereof, however, additional exemplary embodiments are also possible. For example, in the specific exemplary embodiment, the surface 14A of the protruding portions 14 that faces in the tire rotation direction is described as a flat surface. However, provided that the surface 14A has a function of improving the traction performance, then the surface 14A of an additional embodiment does not need to be flat. For example, the surface 14A of an additional embodiment may be a curved surface, or a spherical surface, or another type of surface. In this case, if the angle of this curved surface, spherical surface, or other type of surface relative to a virtual line extending towards an outer side in the tire width direction is set as 0°, then an angle between a tangent of this curved surface, spherical surface, or other type of surface relative to a virtual line extending towards an outer side in the tire width direction may be set to not less than 35° and not more than 55°.

**Claims**

**1.** An agricultural tire (10) comprising:

a plurality of lug blocks (12) that are provided at a tread portion (20); and
protruding portions (14) that protrude towards an outer side in a tire width direction from an end portion (12A) on the outer side in the tire width direction of the lug blocks (12),
wherein the lug blocks (12) are alternately arranged along a tire circumferential direction on both sides in the tire width direction,
a longitudinal direction of each lug block (12) is inclined with respect to the tire width direction the agricultural tire being **characterised in that**
the protruding portions (14) have a surface (14A) that, if an angle of a virtual straight line extending towards the outer side in the tire width direction is taken as 0°, faces a tire rotation direction at an angle of not less than 35° and not more than 55°.

2. The agricultural tire (10) according to claim 1, wherein an end portion (14B) on an outer side in a tire radial direction of the protruding portions (14) is formed further to an inner side in the tire radial direction than an end portion (12B) on the outer side in the tire radial direction of the lug blocks (12).

3. The agricultural tire (10) according to claim 2, wherein a distance in the tire radial direction between the end portion (14B) on the outer side in the tire radial direction of the protruding portions (14) and the end portion (12B) on the outer side in the tire radial direction of the lug blocks (12) is not more than 25 mm.

4. The agricultural tire (10) according to any one of claims 1 to 3, wherein a maximum width in the tire width direction of the protruding portions (14) is not more than 10% of a width in the tire width direction of the tread portion (20).

5. The agricultural tire (10) according to any one of claims 1 to 4, wherein boundary portions (B) between an end portion on an inner side in the tire width direction of the protruding portions (14) and the end portion on the outer side in the tire width direction of the lug blocks (12) match each other on a front side in the tire rotation direction.

6. The agricultural tire (10) according to any one of claims 1 to 5, wherein an end portion (14B) on an outer side in a tire radial direction of the protruding portions (14) is closer to the inner side in the tire radial direction of the lug blocks (12) than a top surface (12B) on the outer side in the tire radial direction of the lug blocks (12).


**Patentansprüche**

1. Landwirtschaftsreifen (10), der Folgendes umfasst:

mehrere Stegblöcke (12), die an einem Lauffächenabschnitt (20) bereitgestellt werden, und
vorspringende Abschnitte (14), die zu einer in einer Reifenbreitenrichtung äußeren Seite hin von einem Endabschnitt (12A) auf der in der Reifenbreitenrichtung äußeren Seite der Stegblöcke (12) aus vorspringen, wobei die Stegblöcke (12) abwechselnd entlang einer Reifenumfangsrichtung auf beiden Seiten in der Reifenbreitenrichtung angeordnet sind,
eine Längsrichtung jedes Stegblocks (12) in Bezug auf die Reifenbreitenrichtung geneigt ist, wobei der Landwirtschaftsreifen **dadurch gekennzeichnet ist, dass**
die vorspringenden Abschnitte (14) eine Fläche (14A) aufweisen, die, falls ein Winkel einer virtuellen geraden Linie, die sich zu der in der Reifenbreitenrichtung äußeren Seite hin erstreckt, 0° beträgt, zu einer Reifendrehungsrichtung in einem Winkel von nicht weniger als 35° und nicht mehr als 55° zeigt.

2. Landwirtschaftsreifen (10) nach Anspruch 1, wobei ein Endabschnitt (14B) auf einer in einer Reifenradialrichtung äußeren Seite der vorspringenden Abschnitte (14) weiter zu einer in der Reifenradialrichtung inneren Seite geformt ist als ein Endabschnitt (12B) auf der in der Reifenradialrichtung äußeren Seite der Stegblöcke (12).

3. Landwirtschaftsreifen (10) nach Anspruch 2, wobei ein Abstand in der Reifenradialrichtung zwischen dem Endabschnitt (14B) auf der in der Reifenradialrichtung äußeren Seite der vorspringenden Abschnitte (14) und dem Endabschnitt (12B) auf der in der Reifenradialrichtung äußeren Seite der Stegblöcke (12) nicht mehr als 25 mm beträgt.

4. Landwirtschaftsreifen (10) nach einem der Ansprüche 1 bis 3, wobei eine maximale Breite der vorspringenden Abschnitte (14) in der Reifenbreitenrichtung nicht mehr als 10 % einer Breite des Lauffächenabschnitts (20) in der Reifenbreitenrichtung beträgt.

5. Landwirtschaftsreifen (10) nach einem der Ansprüche 1 bis 4, wobei Grenzabschnitte (B) zwischen einem Endabschnitt auf einer in der Reifenbreitenrichtung inneren Seite der vorspringenden Abschnitte (14) und dem Endabschnitt auf der in der Reifenbreitenrichtung äußeren Seite der Stegblöcke (12) einander auf einer in der Reifendrehungsrichtung vorderen Seite entsprechen.

6. Landwirtschaftsreifen (10) nach einem der Ansprüche 1 bis 5, wobei ein Endabschnitt (14B) auf einer in einer Reifenradialrichtung äußeren Seite der vorspringenden Abschnitte (14) näher zu der in der Reifenradialrichtung inneren Seite der Stegblöcke (12) ist als eine obere Fläche (12B) auf der in der Reifenradialrichtung äußeren Seite der Stegblöcke (12).

**Revendications**

1. Bandage pneumatique agricole (10), comprenant :

   plusieurs pavés à barrettes (12) agencés au niveau d'une partie de bande de roulement (209) ; et
   des parties en saillie (14) faisant saillie vers un côté externe, dans une direction de la largeur du bandage pneumatique, à partir d'une partie d'extrémité (12A) sur le côté externe, dans la direction de la largeur du bandage pneumatique, des pavés à barrette (12) ;
   dans lequel les pavés à barrettes (12) sont agencés par alternance le long de la direction circonférentielle du bandage pneumatique, sur les deux côtés, dans la direction de la largeur du bandage pneumatique ;
   une direction longitudinale de chaque pavé à barrettes (12) est inclinée par rapport à la direction de la largeur du bandage pneumatique ;
   le bandage agricole étant **caractérisé en ce que** :
   les parties en saillie (14) comportent une surface (14A), qui, lorsqu'un angle d'une ligne droite virtuelle s'étendant vers le côté externe, dans la direction de la largeur du bandage pneumatique, est supposé correspondre à 0°, fait face à une direction de rotation du bandage pneumatique, à un angle non inférieur à 35° et non supérieur à 55°.

2. Bandage pneumatique agricole (10) selon la revendication 1, dans lequel une partie d'extrémité (1B) sur un côté externe, dans une direction radiale du bandage pneumatique, des parties en saillie (14) est formée davantage vers un côté interne, dans la direction radiale du bandage pneumatique, qu'une partie d'extrémité (12B) sur le côté externe, dans la direction radiale du bandage pneumatique, des pavés à barrettes (12).

3. Bandage pneumatique agricole (10) selon la revendication 2, dans lequel une distance, dans la direction radiale du bandage pneumatique, entre la partie d'extrémité (14B) sur le côté externe, dans la direction radiale du bandage pneumatique, des parties en saillie (14) et la partie d'extrémité (12B) sur le côté externe, dans la direction radiale du bandage pneumatique, des pavés à barrettes (12) n'est pas supérieure à 25 mm.

4. Bandage pneumatique agricole (10) selon l'une quelconque des revendications 1 à 3, dans lequel une largeur maximale, dans la direction de la largeur du bandage pneumatique, des parties en saillie (14) ne représente pas plus de 10% d'une largeur, dans la direction de la largeur du bandage pneumatique, de la partie de bande de roulement (20).

5. Bandage pneumatique agricole (10) selon l'une quelconque des revendications 1 à 4, dans laquelle des parties de limitation (B) entre une partie d'extrémité sur le côté interne, dans la direction de la largeur du bandage pneumatique, des parties en saillie (14) et la partie d'extrémité sur le côté externe, dans la direction de la largeur du bandage pneumatique, des pavés à barrettes (14) correspondent les unes aux autres sur un côté avant, dans la direction de rotation du bandage pneumatique.

6. Bandage pneumatique agricole (10) selon l'une quelconque des revendications 1 à 5, dans lequel une partie d'extrémité (14B) sur un côté externe, dans la direction radiale du bandage pneumatique, des parties en saillie (14) est plus proche du côté interne, dans la direction radiale du bandage pneumatique, des pavés à barrettes (12) qu'une surface supérieure (12B) sur le côté externe, dans la direction radiale du bandage pneumatique, des pavés à barrettes (12).

# FIG.1

EP 3 150 405 B1

# FIG.2

# FIG.3

# FIG.4A

$F_x = F_0 \times \sin\theta \times \cos\theta$

$F_y = F_0 \times \cos^2\theta$

# FIG.4B

EP 3 150 405 B1

# FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012051478 A

- GB 1588644 A

**Non-patent literature cited in the description**

- Year Book. JATMA (Japan Automobile Tire Manufacturers Association), 2010